# EUROPEAN PATENT SPECIFICATION

(11) **EP 2 432 313 B1**
(45) Date of publication and mention of the grant of the patent: **18.03.2015**
(21) Application number: 10719292.4
(22) Date of filing: 16.04.2010
(51) Int. Cl.: A01K 39/02

(54) **WATER SUPPLY ASSEMBLY FOR POULTRY**
WASSERVERSORGUNGSANORDNUNG FÜR GEFLÜGEL
ENSEMBLE D'ALIMENTATION D'EAU POUR LA VOLAILLE

(30) Priority: 21.05.2009 EP 09160881
(43) Date of publication of application: 28.03.2012
(73) Proprietor: Teknometal Otomat Metal Sanayi ve Ticaret Ltd.Sti., Istanbul (TR)
(72) Inventor: BAHADIR, Cumhur, Istanbul (TR)
(74) Representative: Sevinç, Erkan
(86) International application number: PCT/EP2010/055075
(87) International publication number: WO 2010/133411

(56) References cited:
- DE-A1- 3 911 309
- US-A- 5 074 250
- US-A- 5 245 950
- US-A- 5 402 750
- US-A1- 2005 160 994

## Description

### Field of the Invention

The present invention relates to watering systems conventionally used for supplying water to poultry animals. The invention particularly pertains to a hygienic watering assembly connected to a water source and a support member, and adapted to receive watering nipples and drip cups without auxiliary fitting components so that achieving a hygienic and easily mountable water supply construction.

### Background of the Invention

Supplying clean water to the small animals held in a poultry yard is of great importance. The small animals, e.g. the chicks, are extremely sensitive to microbic infections especially in the early growing stages. Accumulation of dirt, filths and dusts in both the external and internal surfaces of water supply systems may easily promote the bacterial growth which can be fatal to the livestock animals. This may not only lead to a disease in one animal, but may also bring about contagious diseases among the animals causing even collective deaths. Therefore, the projections and recesses in the inner and outer sides of the conventional watering systems should be reduced as much as possible so that to prevent bacterial accumulation.

The above identified projections and recesses are mostly caused by the extra fixing materials which have to be secured to the main body of the watering system during installation. Such fixing elements are mostly the saddle type clamps which are used for securing the water valves, such as nipples, and water drip cups to the external surface of the watering pipes. Alternatively, said nipples may also be mounted to the water piping by a simple tongue and groove fixing configuration without the saddle clamps in which case the nipple body mostly extends through the inner surface of the watering pipe, and promotes bacterial growth around its connection area.

Those extra elements, on the other hand, increase the installation time and material costs, and require special technical skills for mounting the same to obtain complete installation.

These conventional water delivery systems as defined in the aforementioned explanations are disclosed for instance in the German patent document 39 11 309 as well as in the US Patent Nos. 5,402,750 and 5,293,836.

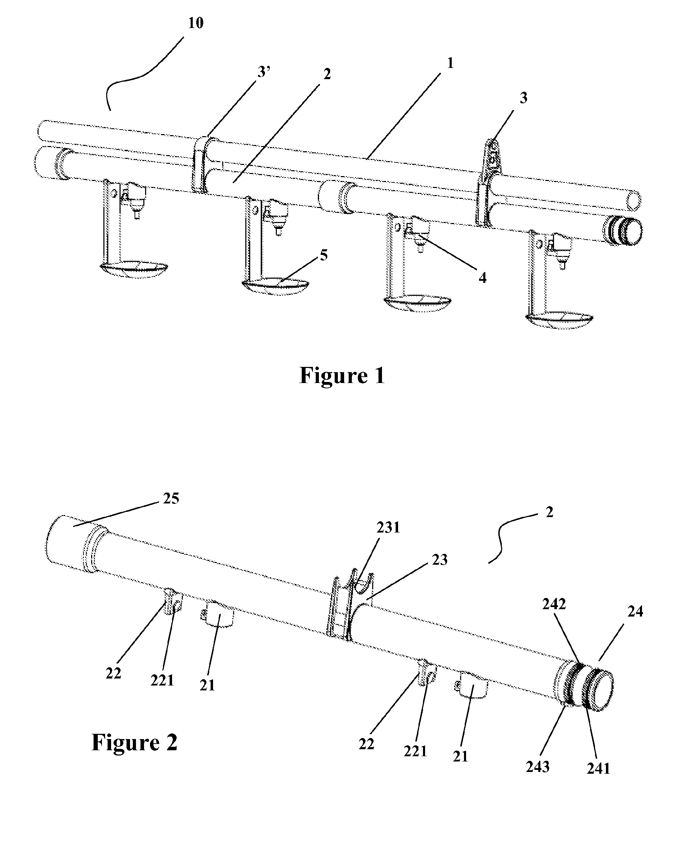

US 5,402,750 shows a classical way of mounting nipples and drip cups as given in Figure 1 of the specification. Saddle clamps are the fixing members for securing nipples and drip cups onto the watering pipe. Furthermore, the nipple extends through the interior of the watering pipe and projects in the vertical direction as shown in Figure 2. All these projections and structural details lead to the above mentioned problems associated with hygiene and installation. Also US 6,860,230 and US 5,293,836 disclose similar saddle type fixing elements for mounting nipples with all the drawbacks described herein. A watering valve, such as nipple, is mounted to the water supply pipe by means of a saddle type fixing element.

Another disadvantageous configuration causing hygiene problems is very similar to that of the above explained systems. These types of water supply assemblies, however employ a rectangular water pipe instead of an annular one as disclosed for instance in US 5,245,950 and WO 2004/095917. These watering systems also require extra components, i.e. fixing elements for securing the nipples and drip cups onto said rectangular piping. Those skilled persons in the art will appreciate that rectangular piping is solely for the purpose of firmly securing said piping to the support member (not to allow axial rotation of the piping) located above. However, water pipes having rectangular cross section are much more disadvantageous than the annular pipes as they readily cause accumulation of dirtiness and bacteria. External surface of the rectangular pipe is also more convenient to catch dusts and dirtiness coming from the exterior sources compared to the annular pipes. Therefore, there is also a need for special fixing means and arrangements which do not allow axial rotation and improper fixation of the water supply conduits.

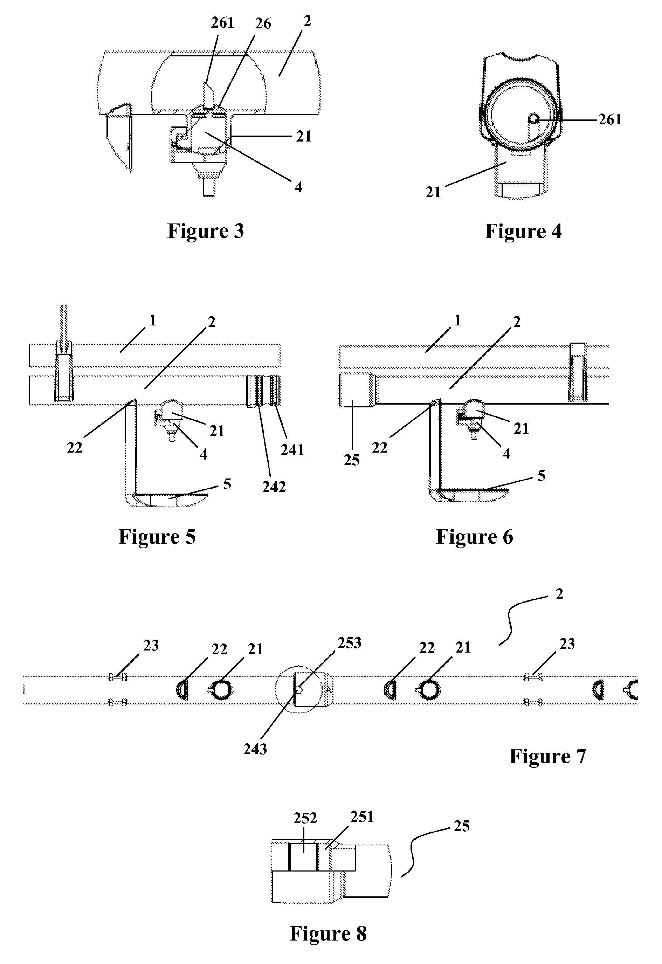

US 7,090,261 discloses a watering system which aims to solve above mentioned axial movement (twisting) problems. The solution to these problems includes use of a coupler to align one pipe to another, and also use of clips to connect the watering line to the stabilizing support bar. However, these components do not eliminate the hygiene problems identified above. The coupler used in between two pipe segments rather increase the structural details in both inside and outside of the pipe segments which contribute bacterial growth. (See Figures 6, 8 and 14). Therefore, it is another object of the present invention to eliminate use of a coupler in the conventional watering systems so that to reduce bacterial contamination, thereby also providing of easy fitting.

US 5,184,570 defines a watering system including two brackets one of which is connected to the support pipe and the other is attached to the water conduit. These two brackets are adapted to engage to eachother so that to prevent twisting of the pipes.

Starting from the prior art as alluded above, there is still a need for providing a water supply assembly for use in the poultry houses which is more hygienic and easily mountable without special expertise and extra components. The invention solves the above identified problems by a water supply assembly according to claim 1.

### Objects of the Invention

One of the objects of the present invention is to provide a watering assembly which has reduced inner surface area so that to decrement bacterial accumulation and contamination;

Another object of the present invention is to provide a watering assembly which has reduced outer surface area so that to decrement bacterial accumulation and contamination;

Another object of the present invention is to provide a water supply assembly comprising one-piece modular water piping units provided with a plug-in connection which renders said piping units readily mountable to eachother without special expertise and extra fitting elements;

Another object of the present invention is to provide a water supply assembly comprising fixing clamps which are adapted to retain the support bar and water piping unit, and prevent twisting of said water piping in axial direction;

A further object of the present invention is to provide a water supply assembly wherein the need for saddle type clamps to secure nipples and drip cups onto the water piping unit is eliminated; and

Still a further object of the present invention is to provide a water supply assembly adapted to receive nipples and drip cups within pre-formed slots which are integrally formed with the water piping unit.

### Brief Description of the Drawings

The attached drawings are given solely for illustrating an embodiment of the invention, wherein
Figure 1 shows a perspective view of a complete watering assembly of the present invention,
Figure 2 is a perspective view of the one-piece water piping unit of the present invention,
Figure 3 shows a cross sectional detail of the nipple connection section according to the present invention,
Figure 4 shows a cross sectional view from the longitudinal direction of the water piping unit shown in Figure 2,
Figure 5 shows a side view of the water piping unit including a female plug-in arrangement in one end, which is secured a nipple and a drip cup in accordance with the present invention,
Figure 6 shows a side view of the water piping unit including a male plug-in arrangement in one end, which is secured a nipple and a drip cup in accordance with the present invention,
Figure 7 is a lowermost view of the water piping unit of the present invention shown in Figure 2,
Figure 8 is a detailed view of the male plug-in arrangement of said water piping unit,
Figure 9 is a side view of two water piping units which are secured to eachother by a plug-in arrangement according to the present invention,
Figure 10 shows a detailed side view of the complete set of the water supply assembly of the present invention in mounted form,
Figures 11a, 11b, and 11c show different views of a drip cup adapted to engage with corresponding slots on the water piping unit of the present invention,
Figures 12a, 12b, and 12c show different views of a nipple orifice adapted to engage with the water piping unit of the present invention,
Figures 13a, 13b, and 13c show different views of a clamp having a holed projection for hanging, adapted to engage with a stabilizing bar and water piping unit according to the present invention, and
Figures 14a, 14b, and 14c show different views of an alternative clamp having no projection for hanging, adapted to engage with a stabilizing bar and water piping unit according to the present invention.

### Detailed Description of the Invention

Objects of the present invention have been achieved with a water supply assembly (10) for poultry complete mounted form of which is shown in Figure 1. In accordance with the objects mainly mentioned in the aforementioned parts of the description, it is the goal of the present invention to reduce overall surface area (i.e. inner surface area of the water piping unit (2) plus the outer surface area of the complete assembly) of a poultry watering assembly for providing cleaner growth conditions for the small animals. Uneven surfaces may easily collect unwanted dirt and dust causing microbial contamination which is harmful for the sensitive chicks.

The assembly (10) mainly comprises a plurality of water piping units (2) serving as a conduit for watering livestock, a stabilizing support bar (1), tensioning clamps (3, 3'), nipples (4) and drip cups (5). The piping unit (2) of the present invention is arranged as a one-piece device having suitable slots and projections integrally formed on its structure. Therefore, the piping unit (2) of the present invention is formed of a moldable or extrudable material, preferably formed of a polymeric material, more preferably of a plastic material molded or extruded to form necessary details integrally with the piping body (2). Said material may be for instance thermosets, e.g. phenolics, ureas, melamines, epoxies, polyesters, rubbers, and polyurethanes etc.; or thermoplastics, e.g. polyoxymethylene (POM), polyacrylates, polyamide, polyethylene terephthalate, polycarbonate, polyester, polypropylene, polyethylene, polystyrene, polyvinyl chloride, polyvinylidene chloride etc. Polyoxymethylene (polyacetal) is particularly preferable.

The one piece unit (2) as defined above comprises a clamping slot (23) adapted to be tightly attached to a tensioning clamp (3, 3'), a nipple slot (21) adapted to receive and secure a watering nipple (4), a drip cup slot (22) adapted to receive and secure a drip cup (5), and a female plug-in section (25) in one end and a male plug-in section (24) in the other end as shown in Figures 2, 5 and 6.

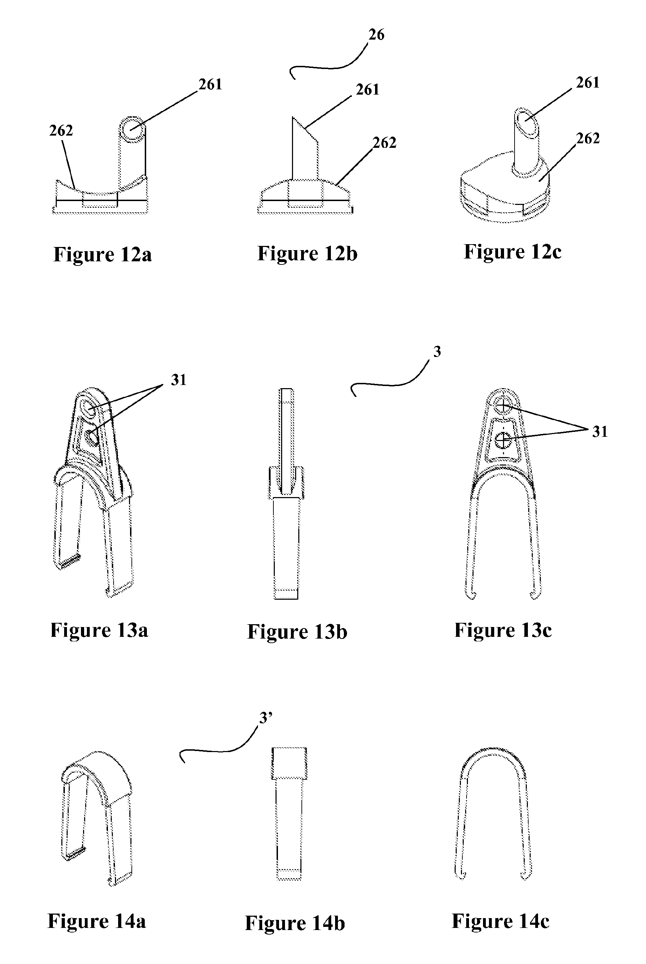

Referring now to Figure 3, the nipple slot (21) integrally formed with the water piping unit (2) is substantially adapted to receive the nipple body (4) therethrough. In other words nipple body (4) does not project through inside of the water pipe (2) but remains in said slot (21). Since this slot (21) sufficiently surrounds the nipple body (4) and securely fixes the same to the water pipe (2) body, needs for the conventional saddle type clamps or tongue and groove connections through inside of the pipe (2) for fixing purposes are eliminated. Therefore, the only part projecting into the piping (2) is the optional water orifice (26) which is shown in Figures 12a, 12b and 12c. Said orifice (26) preferably comprises a funnel (261) and a base (262) adapted to be located in the respective hole right above the nipple (4). Said funnel (261), as seen in the figures, preferably has an inclined mouth and is closer to one side of the base (262) rather than being in the middle as shown in Figure 4. The reason of this inclined mouth is to arrange its open sided section in the opposite direction of water flow, thereby to prevent water flow directly into the funnel (261). This clearly prevents the impurities directly to fall into the funnel (261). Locating the funnel (261) out of the middle of the base (262), preferably on one edge of said base (262), has the technical effect in terms of reducing accumulation of unwanted dirtiness and impurities around the water flow region of said orifice (26). For the similar purposes, the base (262) of the orifice device (26) is preferably arranged with a curved surface so that the impurities and dirtiness flow with the water stream without being attached somewhere around the orifice device (26).

With the above configuration, the watering assembly (10) of the present invention considerably reduces accumulation of impurities and dirtiness of mains water around the nipple (4) joint in both interior and exterior surface of the water piping unit. This is simply because the internal and external surface areas exposed to water and poultry medium respectively are reduced, and also smoothened *(this is beneficial for keeping the surface substantially clean compared to the cornered structures)* with the novel piping unit (2) of the present invention.

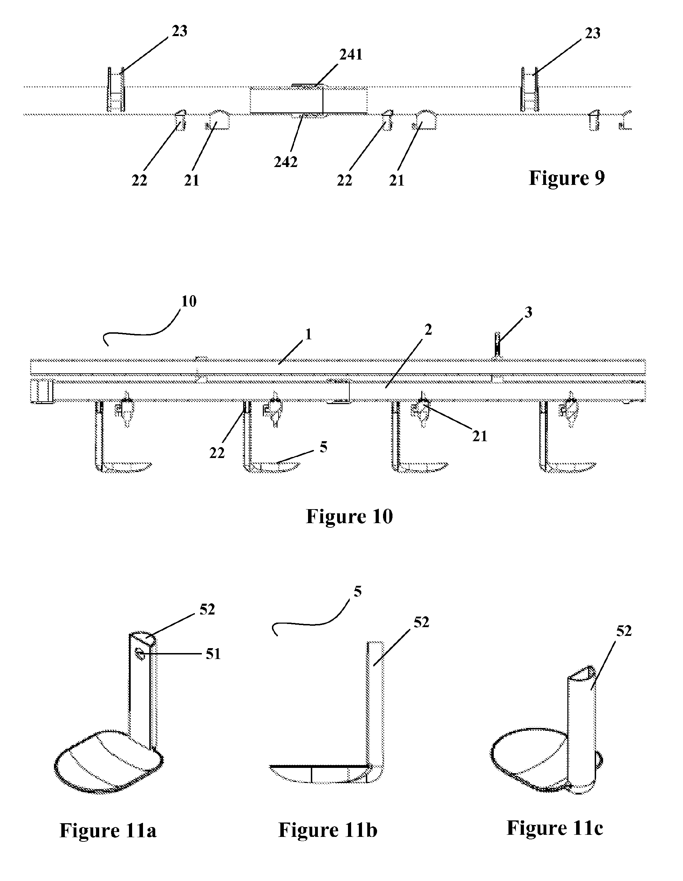

A similar improvement has also been implemented on the connection means of the drip cups (5) shown in Figures 11a, 11b and 11c, which are similarly secured to the piping unit (2) body by means of a number of slots (22) integrally formed with the piping unit (2). The drip cups (5) are adapted to attach to the piping unit (2) such that hilts (52) of the drip cups (5) tightly engage to said slots (22). This arrangement does also eliminate the need for extra fixing elements, reduces the surface area outside of the piping unit (2), and thus provides all the advantages described herein. The hilt (52) defined above may optionally include a recess (51) thereon, and a corresponding projection (221) on the drip cup slots (22), or vice versa so that to prevent the drip cup (5) unintentionally to be disengaged from the slots (22).

Eventually, the above identified improvements, that are made in the connection regions of nipples (4) and drip cups (5) considerably decrease the overall surface area of a piping unit (2) and provide a smoother inner and outer surface which does not suffer from the well known drawbacks of the prior art.

Another inventive improvement of the preferred embodiment of the invention has been made on the connections of individual piping units (2) to eachother. As previously mentioned, each piping unit (2) further comprises a male plug-in arrangement (24) in one end and a female plug-in arrangement (25) in the other end as shown in Figures 5 and 6 respectively. The piping units (2) as defined above are attached to eachother sequentially along a water line by virtue of the male and female plug-ins (24, 25) formed in both ends thereof. The male plug-in (24) unit comprises a front section (241) and a back section (242) each having an o-ring for assuring water-proof connection. In a preferred embodiment said front section (241) is smaller than the back section (242) to assure gradual fitting to the female plug-in connection part (25). Said female plug-in (25) is also provided with the corresponding housings (251, 252) adapted to receive the front and back sections (241, 242) of said male plug-in (24) as shown in Figure 8. Accordingly, the front housing (252) is larger than the back housing (251) to assure objective gradual fitting. Figure 9 shows the cross section of the connection regions of two piping units (2) when they are engaged to eachother in accordance with the present invention. In a further preferred embodiment, the male plug-in (24) includes a projection (243) and the female plug-in (25) includes a corresponding recess (253) as shown in Figure 7 so that to prevent twisting of the piping units (2) relative to eachother. This configuration of connection including the above identified items do also eliminate need for using extra fitting elements in between two piping units (2) which reduces again the overall costs, installation times and surface area for hygiene.

Cross sectional view of a complete watering assembly (10) according to the above explained embodiment of the present invention has been shown in Figure 10.

Figures 13a, 13b and 13c show a preferred tensioning clamp configuration (3) adapted to firmly retain the water piping unit (2) and stabilizing support bar (1), which is adapted to attach to the clamping slot (23) of said piping unit (2). Said clamping slot (23) is preferably located in the centre of gravity of the piping unit (2) so that to obtain a stable assembly when installed above the yard surface. The stabilizing support bar (3) is placed onto the semi-circular bearing (231) of the slot (23) so that a firm assembly (10) has been attained. The tensioning clamps (3) may comprise an additional projection including a number of holes (31) on top thereof which can function in the cases where the poultry assembly (10) is hung to an object to keep said assembly (10) well above the ground. Optionally said tensioning clamps (3') may also be provided without a projection and holes (31) as shown in Figures 14a, 14b and 14c.

A skilled person would appreciate that the preferred embodiment of the invention herein disclosed may be modified, and geometrically and dimensionally changed without departing from the scope of claim 1. Any modification made in one of the components of the main body of the watering piping unit (2), especially in the clamping slot (23), tensioning clamp (3, 3'), nipple slot (21) and drip cup slot (22) will still provide the beneficial solution of claim 1, therefore the modification shall still be within the scope of the appended claims.

## Claims

1. A watering assembly (10) comprising a water piping unit (2) serving as a conduit for watering livestock, a nipple valve (4) and a drip cup (5), said piping unit (2) comprising;
a nipple slot (21) which is integrally formed with said piping unit (2), said nipple slot (21) being adapted receive and retain the nipple valve (4) such that the nipple (4) is fixedly engaged through inside the slot (21), **characterised by**
a drip cup slot (22) which is integrally formed with said piping unit (2), said drip cup slot (22) being adapted to engage with a hilt (52) of said drip cup (5) such that the slot (22) engages to inside or outside of said hilt (52).

2. A watering assembly (10) according to claim 1 wherein one of the drip cup slot (22) and said hilt (52) comprises a recess (51), and the other one comprises a corresponding projection (221).

3. A watering assembly (10) according to claim 1 wherein the assembly (10) further comprises a stabilizing support bar (1).

4. A watering assembly (10) according to claim 1 wherein the water piping unit (2) further comprises a clamping slot (23) having a bearing (231) to hold a stabilizing bar (1).

5. A watering assembly (10) according to claim 4 wherein the water piping unit (2) further comprises a tensioning clamp (3, 3') adapted to retain the water piping unit (2) and stabilizing support bar (1) by engaging to the clamping slot (23) of said piping unit (2).

6. A watering assembly (10) according to claim 1 wherein the water piping unit (2) further comprises a water orifice (26) in its inner surface located right above the nipple (4).

7. A watering assembly (10) according to claim 6 wherein the water orifice (26) comprises a funnel (261) having an inclined mouth and a base (262) below said funnel (261).

8. A watering assembly (10) according to claim 7 wherein said funnel (261) is closer to one side of the base (262) such that it is located out of the middle of said base (262).

9. A watering assembly (10) according to claim 1 wherein the water piping unit (2) further comprises a female plug-in section (25) in one end and a male plug-in section (24) in the other end which plug-in sections (24, 25) are adapted to engage to eachother so that to attach a number of piping units (2) sequentially along a watering line.

10. A watering assembly (10) according to claim 9 wherein the male plug-in (24) comprises a front section (241) and a back section (242) each having an o-ring for assuring water-proof connection, and said female plug-in section (25) comprises a front housing (252) and a back housing (251), said front housing (252) receiving the back section (242) and said back housing (251) receiving the front section (241) of the male plug-in (24) when two water piping units (2) are engaged to eachother.

11. A watering assembly (10) according to claim 10 wherein the front section (241) is smaller than the back section (242), and front housing (252) is larger than the back housing (251) to assure gradual fitting.

12. A watering assembly (10) according to claim 9 wherein the male plug-in (24) comprises a projection (243) and the female plug-in (25) comprises a corresponding recess (253).

13. A watering assembly (10) according to claim 4 wherein said clamping slot (23) is located in the centre of gravity of the water piping unit (2).

## Patentansprüche

1. Tränkanordnung (10) mit einer Wasserleitungseinheit (2), die als ein Kanal zum Tränken von Vieh dient, einem Warzenventil (4) und einer Auffangschale (5), wobei die Leitungseinheit (2) aufweist:
einen Nippelschlitz (21), der einstückig mit der Leitungseinheit (2) ausgebildet ist, wobei der Nippelschlitz (21) das Warzenventil (4) aufzunehmen und zu halten vermag, so dass die Warze (4) sich durch den Schlitz (21) innen feststehend im Eingriff befindet, **gekennzeichnet durch**
einen Auffangschalenschlitz (22), der einstückig mit der Leitungseinheit (2) ausgebildet ist, wobei der Auffangschalenschlitz (22) in Eingriff mit einem Griff (52) der Auffangschale (5) zu kommen vermag, so dass der Schlitz (22) innen oder außen am Griff (52) eingreift.

2. Tränkanordnung (10) nach Anspruch 1, bei der der Auffangschalenschlitz (22) oder der Griff (52) eine Ausnehmung (51) aufweist und der jeweils andere einen entsprechenden Vorsprung (221) aufweist.

3. Tränkanordnung (10) nach Anspruch 1, bei der die Anordnung (10) ferner eine stabilisierende Stützstange (1) aufweist.

4. Tränkanordnung (10) nach Anspruch 1, bei der die Wasserleitungseinheit (2) ferner einen Klemmschlitz (23) mit einem Lager (231) aufweist, um eine stabilisierende Stange (1) zu halten.

5. Tränkanordnung (10) nach Anspruch 4, bei der die Wasserleitungseinheit (2) ferner eine Spannklemme (3, 3') aufweist, die die Wasserleitungseinheit (2) und die stabilisierende Stützstange (1) durch Eingreifen in den Klemmschlitz (23) der Leitungseinheit (2) zu halten vermag.

6. Tränkanordnung (10) nach Anspruch 1, bei der die Wasserleitungseinheit (2) ferner eine Wasseröffnung (26) in ihrer inneren Oberfläche unmittelbar oberhalb der Warze (4) aufweist.

7. Tränkanordnung (10) nach Anspruch 6, bei der die Wasseröffnung (26) eine Abzugsröhre (261) mit einem schrägen Mundloch und eine Basis (262) unterhalb der Abzugsröhre (261) aufweist.

8. Tränkanordnung (10) nach Anspruch 7, bei der die Abzugsröhre (261) einer Seite der Basis (262) näher ist, so dass sie von der Mitte der Basis (262) weg angeordnet ist.

9. Tränkanordnung (10) nach Anspruch 1, bei der die Wasserleitungseinheit (2) ferner einen weiblichen Steckabschnitt (25) an einem Ende und einen männlichen Steckabschnitt (24) am anderen Ende aufweist, wobei die Steckabschnitte (24, 25) miteinander in Eingriff zu treten vermögen, um mehrere Leitungseinheiten (2) der Reihe nach längs einer Tränklinie anzubringen.

10. Tränkanordnung (10) nach Anspruch 9, bei der der männliche Stecker (24) einen vorderen Abschnitt (241) und einen hinteren Abschnitt (242) aufweist, die jeweils einen O-Ring zum Gewährleisten einer wasserdichten Verbindung haben, und dass der weibliche Steckabschnitt (25) ein vorderes Gehäuse (252) und ein hinteres Gehäuse (251) aufweist, wobei das vordere Gehäuse (252) den hinteren Abschnitt (242) und das hintere Gehäuse (251) den vorderen Abschnitt (241) des männlichen Steckers (24) aufnimmt, wenn zwei Wasserleitungseinheiten (2) miteinander in Eingriff gebracht werden.

11. Tränkanordnung (10) nach Anspruch 10, bei der der vordere Abschnitt (241) kleiner ist als der hintere Abschnitt (242) und das vordere Gehäuse (252) größer ist als das hintere Gehäuse (251), um ein allmähliches Einpassen zu gewährleisten.

12. Tränkanordnung (10) nach Anspruch 9, bei der der männliche Stecker (24) einen Vorsprung (243) und der weibliche Stecker (25) eine entsprechende Aussparung (253) aufweisen.

13. Tränkanordnung (10) nach Anspruch 4, bei der der Klemmschlitz (23) sich im Masseschwerpunkt der Wasserleitungseinheit (2) befindet.

## Revendications

1. Ensemble d'abreuvement (10) comprenant une unité de canalisation (2) servant de conduit pour l'abreuvement d'animaux d'élevage, une soupape à tétine (4) et un godet récupérateur de gouttes (5), ladite unité de canalisation (2) comprenant :
une fente de tétine (21) qui est formée intégralement avec ladite unité de canalisation (2), ladite fente de tétine (21) étant adaptée à recevoir et retenir la soupape à tétine (4) de façon que la tétine (4) vient prendre, de manière fixe, à travers l'intérieur de la fente (21), **caractérisé par**
une fente de godet récupérateur de gouttes (22), qui est formée intégralement avec ladite unité de canalisation (2), ladite fente de godet récupérateur de gouttes (22) étant adaptée à venir en prise avec un manche (52) dudit godet récupérateur de gouttes (5) de façon que la fente (22) vienne en prise avec l'intérieur ou l'extérieur dudit manche (52).

2. Ensemble d'abreuvement (10) suivant la revendication 1, dans lequel une parmi la fente de godet récupérateur de gouttes (22) et ledit manche (52) comprend une cavité (51) et l'autre comprend une saillie correspondante (221).

3. Ensemble d'abreuvement (10) suivant la revendication 1 comprenant, en outre, une barre d'appui stabilisatrice (1).

4. Ensemble d'abreuvement (10) suivant la revendication 1, dans lequel l'unité de canalisation (2) comprend, en outre, une fente de serrage (23) ayant un logement (231) destiné à recevoir une barre stabilisatrice (1).

5. Ensemble d'abreuvement (10) suivant la revendication 4, dans lequel l'unité de canalisation (2) comprend, en outre, une bride de tension (3, 3') adaptée à retenir l'unité de pompage d'eau (2) et une barre d'appui stabilisatrice (1) en prenant dans la fente de serrage (23) de ladite unité de canalisation (2).

6. Ensemble d'abreuvement (10) suivant la revendication 1, dans lequel l'unité de canalisation comprend, dans sa surface interne, un orifice pour l'eau (26) situé à droite, au-dessus de la tétine (4).

7. Ensemble d'abreuvement (10) suivant la revendication 6, dans lequel l'orifice pour l'eau (26) comprend un entonnoir (261) ayant une bouche inclinée et se terminant par un tube (262).

8. Ensemble d'abreuvement (10) suivant la revendication 7, dans lequel un côté dudit entonnoir (261) est plus près du tube (262) de façon à se situer en dehors du centre dudit tube (262).

9. Ensemble d'abreuvement (10) suivant la revendication 1, dans lequel l'unité de canalisation (2) comprend, en outre, une section de raccord à emboîtement femelle (25) à une extrémité et une section de raccord à emboîtement mâle (24) à l'autre extrémité, lesdites sections de raccord à emboîtement (24, 25) étant adaptées à s'emboîter, l'une dans l'autre, de façon à raccorder plusieurs unités de canalisation (2) séquentiellement le long d'une ligne d'abreuvement.

10. Ensemble d'abreuvement (10) suivant la revendication 9, dans lequel le raccord mâle (24) comprend une section avant (241) et une section arrière (242) ayant chacune une bague en o pour assurer un raccordement étanche et ladite section de raccord à emboîtement femelle (25) comprend un boîtier avant (252) et un boîtier arrière (251), ledit boîtier avant (252) recevant la section arrière (242) et ledit boîtier arrière (251) recevant la section avant (241) du raccord à emboîtement mâle (24) lorsque deux unités de canalisation sont raccordées l'une à l'autre.

11. Ensemble d'abreuvement (10) suivant la revendication 10, dans lequel la section avant (241) est plus petite que la section arrière (242) et le boîtier avant (252) est plus large que le boîtier arrière (251) pour assurer un raccordement graduel.

12. Ensemble d'abreuvement (10) suivant la revendication 9, dans lequel le raccord à emboîtement mâle (24) comprend une saillie (243 et le raccord à emboîtement femelle (25) comprend une cavité correspondante (253).

13. Ensemble d'abreuvement (10) suivant la revendication 4, dans lequel ladite fente de serrage (23) est située au centre de gravité de l'unité de canalisation (2).
